# FASCICULE DE BREVET EUROPEEN

(11) **EP 4 136 000 B1**
(45) Date de publication et mention de la délivrance du brevet: **19.03.2025**
(21) Numéro de dépôt: 21715886.4
(22) Date de dépôt: 29.03.2021
(51) Int. Cl.: B60S 1/34, B60S 1/16, F16C 33/20, F16C 35/02, H02K 7/116, H02K 7/08

(54) **ASSEMBLAGE MECANIQUE, MOTO-REDUCTEUR ET PROCEDE DE FIXATION ASSOCIE**
MECHANISCHE ANORDNUNG, GETRIEBEMOTOR UND ZUGEHÖRIGES BEFESTIGUNGSVERFAHREN
MECHANICAL ASSEMBLY, GEAR MOTOR AND ASSOCIATED ATTACHMENT METHOD

(30) Priorité: 13.04.2020 FR 2003685
(43) Date de publication de la demande: 22.02.2023
(73) Titulaire: Valeo Systèmes d'Essuyage, 78322 le Mesnil Saint Denis (FR)
(72) Inventeur: SERVIN, Alain, 78322 LE MESNIL SAINT DENIS (FR); BERTHOME, Jean-Michel, 78322 LE MESNIL SAINT DENIS (FR); AUBUGEAU, Quentin, 78322 LE MESNIL SAINT DENIS (FR)
(74) Mandataire: Valeo Visibility
(86) Numéro de dépôt international: PCT/EP2021/058214
(87) Numéro de publication internationale: WO 2021/209253

(56) Documents cités:
- EP-A1- 0 635 651
- EP-A1- 3 025 913
- EP-A1- 3 333 025
- EP-A1- 3 744 585
- DE-A1- 102015 122 094
- FR-A- 1 319 123
- FR-A1- 3 007 359
- US-B2- 8 448 289

## Description

La présente invention concerne un assemblage d'un fût plastique sur un boîtier métallique d'un dispositif mécanique comprenant un arbre. Le boîtier métallique correspond par exemple à un boîtier d'un moto-réducteur, notamment d'un dispositif d'essuyage d'un véhicule automobile.

Les arbres de sortie des moto-réducteurs des systèmes d'essuyage notamment pour les vitres arrières des véhicules automobiles comprennent généralement un arbre de sortie relativement long pour permettre le passage à travers la carrosserie. Il est ainsi nécessaire d'utiliser un fût de guidage de l'arbre qui est fixé sur le boîtier du moto-réducteur renfermant le mécanisme réducteur.

Il existe dans l'état de la technique de tels fûts mais ces derniers sont généralement coûteux et/ou difficile à fabriquer ou à fixer sur le boîtier du moto-réducteur. Le document EP o 635 651 A1 montre un tel dispositif faisant partie de l'état de la technique.

Il convient donc de fournir une solution permettant d'obtenir un fût peu coûteux et aisé à fixer sur le boîtier. De plus, l'assemblage du fût et du boîtier doit permettre d'éviter l'introduction de saletés ou d'humidité à l'intérieur du boîtier de manière à préserver la durée de vie du mécanisme réducteur.

A cet effet, la présente invention concerne un procédé de fixation d'un fût plastique destiné à guider un arbre de sortie d'un dispositif mécanique sur un boîtier dudit dispositif mécanique, ledit boîtier comprenant une cheminée limitée par un bord supérieur et une base, ladite cheminée étant agencée pour entourer partiellement l'arbre de sortie, le fût plastique comprenant une protubérance latérale, le procédé comprenant au moins les étapes suivantes :
- on insère une première extrémité du fût plastique dans la cheminée du boîtier jusqu'à ce que la protubérance latérale vienne en butée axiale contre le bord supérieur de la cheminée,
- on déforme au moins partiellement la première extrémité du fût plastique pour former une contre-butée axiale.

Selon un autre aspect de la présente invention, le boîtier est par exemple un boîtier métallique ou un boîtier plastique dont la dureté peut être différente de la dureté du plastique du fût.

Selon un autre aspect de la présente invention, la base de la cheminée est au moins partiellement évasée vers l'intérieur du boîtier et l'étape de déformation comporte l'évasement par déformation plastique de la première extrémité du fût plastique.

Selon un autre aspect de la présente invention, l'étape de déformation comprend une étape de chauffage.

Selon un autre aspect de la présente invention, la température de chauffe est comprise entre 150 et 180°.

Selon un autre aspect de la présente invention, l'étape de déformation comprend une étape d'application d'ultrasons.

Selon un autre aspect de la présente invention, le fût plastique est réalisé en polyamide qui peut être chargé, c'est-à-dire renforcé en fibre de verre par exemple.

Selon un autre aspect de la présente invention, la cheminée du boîtier comprend au moins un évidement et l'étape de déformation comprend la déformation du fût plastique dans ledit, au moins un évidement pour former un ergot anti-rotation.

Selon un autre aspect de la présente invention, le dispositif mécanique est un moto-réducteur d'un dispositif d'essuyage.

La présente invention concerne également un assemblage d'un boîtier tel que décrit précédemment et d'un fût plastique, le fût plastique comprenant une protubérance latérale formant butée et délimitant une première extrémité destinée à venir s'insérer dans la cheminée du boîtier autour de l'arbre de sortie, la première extrémité du fût plastique ayant été déformé au moins partiellement pour former une contre-butée axiale.

Selon un autre aspect de la présente invention, la protubérance latérale a une forme de collerette.

Selon un autre aspect de la présente invention, la collerette comprend une partie extrémale recourbée vers la première extrémité.

Selon un autre aspect de la présente invention, la collerette forme un déflecteur d'eau afin d'empêcher l'introduction de gouttelettes dans le boîtier.

Selon un autre aspect de la présente invention, la cheminée comprend une contre-forme au moins en partie annulaire configurée pour coopérer avec la protubérance latérale.

Selon un autre aspect de la présente invention, la première extrémité du fût plastique est évasée pour coopérer avec la base évasée de la cheminée.

Selon un autre aspect de la présente invention, la première extrémité du fût plastique est déformée pour venir dans l'évidement et former un ergot anti-rotation.

La présente invention concerne également un moto-réducteur comprenant un moteur électrique, un réducteur comprenant un arbre de sortie, un boîtier tel que décrit précédemment renfermant au moins partiellement le moteur électrique et le réducteur et un fût plastique formant un assemblage avec le boîtier tel que décrit précédemment.

D'autres caractéristiques et avantages de l'invention ressortiront de la description suivante, donnée à titre d'exemple et sans caractère limitatif, en regard des dessins annexés sur lesquels :
- la figure 1 représente une vue schématique en perspective d'un moto-réducteur selon la présente invention,
- la figure 2 représente une vue schématique en perspective d'un fût selon la présente invention,
- la figure 3 représente une vue schématique en perspective et en coupe d'une partie d'un boîtier d'un moto-réducteur selon la présente invention,
- la figure 4 représente une vue schématique en perspective et en coupe d'un assemblage comprenant un boîtier d'un moto-réducteur et un fût selon la présente invention,
- les figures 5, 6 et 7 représente des vue schématiques en perspective et en coupe de différentes étapes d'un assemblage selon la présente invention,
- la figure 8 représente un organigramme des différentes étapes de l'assemblage du fût sur le boîtier selon la présente invention.

Sur toutes les figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation ou que les caractéristiques s'appliquent seulement à un seul mode de réalisation. De simples caractéristiques de différents modes de réalisation peuvent également être combinées ou interchangées pour fournir d'autres réalisations.

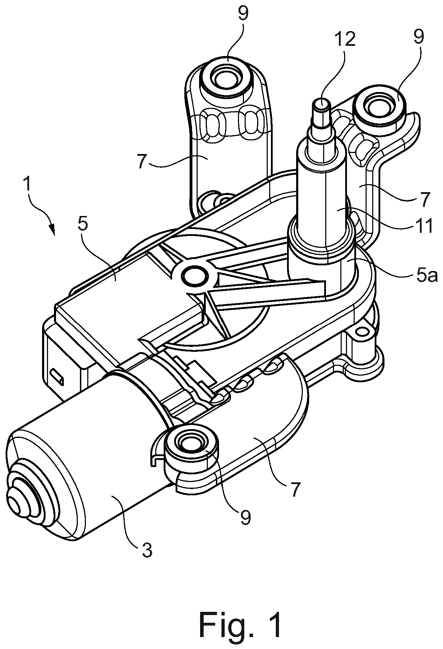

La figure 1 représente un schéma en perspective d'un moto-réducteur 1 destiné à un dispositif d'essuyage de vitre arrière d'un véhicule automobile.

Le moto-réducteur 1 comprend un moteur électrique 3, un mécanisme réducteur (non représenté) disposé dans un boîtier 5 et relié au moteur électrique 3. Le boîtier 5 est par exemple un boîtier métallique ou un boîtier plastique et peut comprendre des pattes de fixation 7 pour permettre la fixation sur un élément de carrosserie par exemple. Des silentblocs 9 peuvent être disposés au niveau des pattes de fixation 7 pour produire un découplage vibratoire et acoustique avec l'élément de carrosserie.

Le moto-réducteur 1 comprend également un fût 11 en matière plastique destiné à guider un arbre de sortie 12 du moto-réducteur 1. Le fût plastique 11 est par exemple réalisé en polyamide qui peut être chargé ou non, c'est-à-dire renforcé en fibre de verre notamment ou tout autre type de fibre permettant de renforcer le polyamide. Dans le cas d'un boîtier en matière plastique, le matériau du boîtier et du fût peuvent être différent et les duretés des deux matériaux peuvent être différentes.

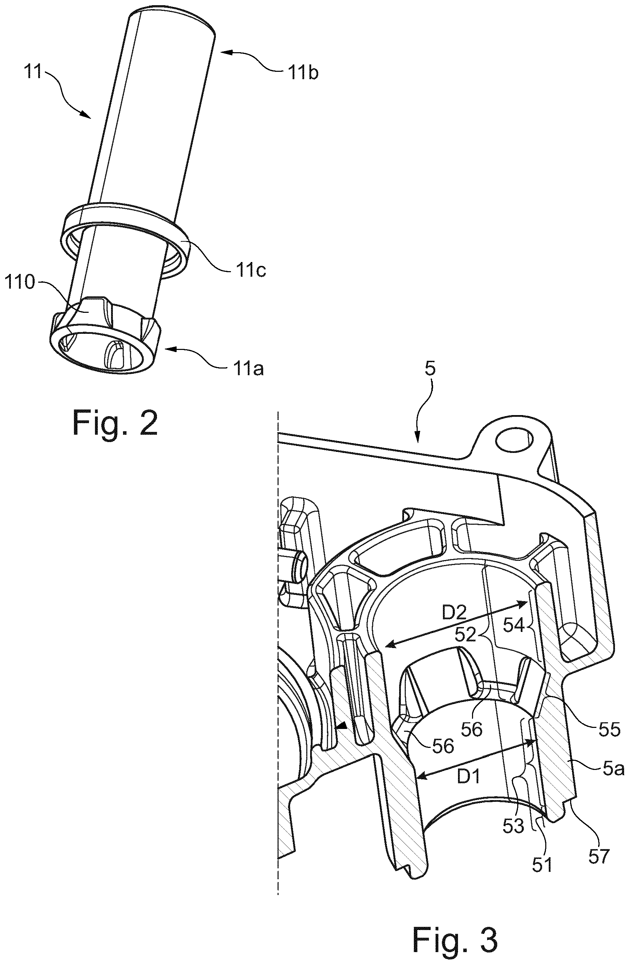

La figure 2 représente le fût 11 seul. Le fût 11 a une forme générale cylindrique et comprend une première extrémité 11a dite extrémité interne destinée à être insérée dans le boîtier 5 au niveau d'une cheminée 5a du boîtier 5 et une deuxième extrémité 11b. Le fût 11 comprend également une protubérance latérale 11c qui délimite la partie du fût destinée à être insérée dans la cheminée 5a du boîtier 5. La protubérance latérale 11c présente une forme générale de collerette. La collerette peut être recourbée avec une première portion qui s'étend de manière annulaire autour du cylindre puis une deuxième portion qui s'étend parallèlement au fût 11 en direction de la première extrémité 11a, la première et la deuxième portion étant reliées par une portion intermédiaire coudée.

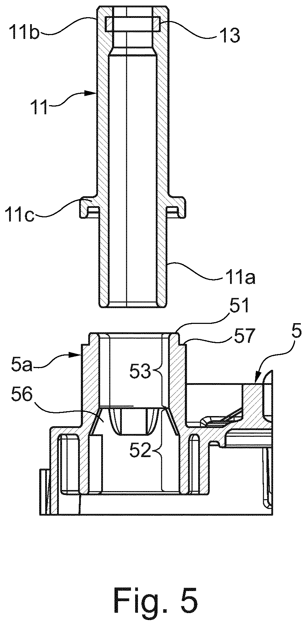

La première extrémité 11a est destinée à être déformée après son introduction dans la cheminée 5a du boîtier 5 pour assurer la fixation du fût 11 sur le boîtier 5. La figure 2 représente donc le fût 11 après sa déformation. Avant son introduction dans la cheminée 5a du boîtier 5, la première extrémité 11a présente une forme cylindrique (voir figure 5).

Comme représenté sur la figure 3, la cheminée 5a s'étend entre un bord supérieur ou portion extrémale 51 et une base 52. Le bord supérieur 51 est porté par une portion cylindrique 53 d'un premier diamètre D1. La base 52 comprend une portion proximale 54 d'un deuxième diamètre D2 supérieur au premier diamètre D1 et une portion intermédiaire évasée 55 destinée à recevoir l'extrémité 11a du fût. Le bord supérieur 51 comprend par exemple un retrait de matière circonférentiel 57 destiné à recevoir la deuxième portion de la protubérance latérale 11c et formant une contre-forme annulaire. La portion intermédiaire évasée 55 peut également comprendre un ou plusieurs évidements 56, par exemple trois, ménagés sur une portion de la circonférence interne de la cheminée 5a et destinés à recevoir des ergots anti-rotation 110. Les évidements 56 peuvent être répartis régulièrement sur le pourtour de la cheminée 5a. En effet, comme cela sera mieux décrit dans la suite de la description, le fût 11 est destiné à être déformé après son introduction dans la cheminée 5a de sorte que la présence d'évidement(s) 56 provoque une déformation irrégulière de la première extrémité 11a du fût 11 sur sa circonférence conduisant à la formation d'ergot(s) anti-rotation 110 au niveau du ou des évidements 56 ce qui permet d'empêcher toute rotation du fût 11 par rapport à la cheminée 5a. Le fait que la cheminée 5a soit évasée permet de bloquer une translation du fût 11 en créant une contre-butée, la butée étant créée par la mise en contact entre la protubérance latérale 11c et le bord supérieur 51 de la cheminée 5a.

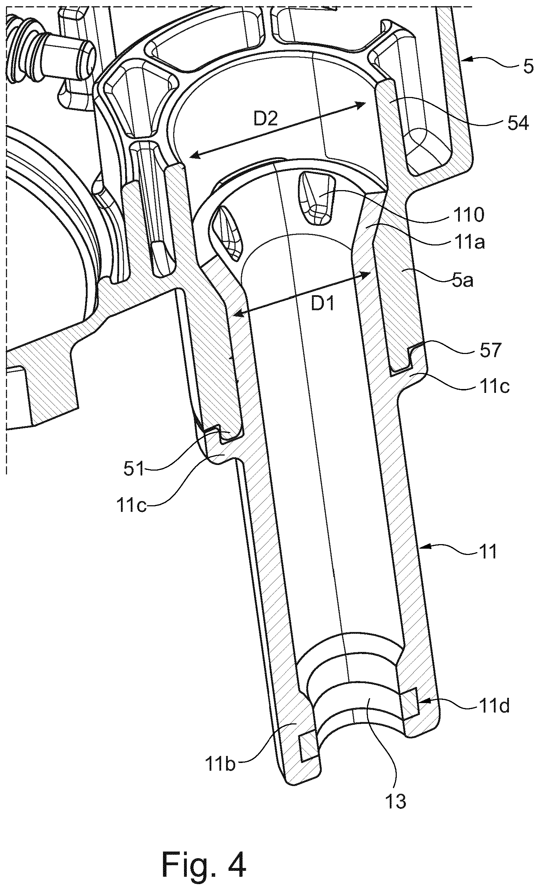

La figure 4 représente le fût 11 à l'état assemblé dans la cheminée 5a du boîtier 5 après déformation de la première extrémité 11a du fût 11 pour former un assemblage entre le boîtier 5 et le fût 11. La protubérance latérale 11c est en appui sur le bord supérieur 51 de la cheminée 5a et vient s'emboîter par complémentarité de forme autour du retrait de matière circonférentiel 57 ménagé sur le bord supérieur 51 de la cheminée 5a du boîtier 5. Le retrait de matière circonférentiel 57 agit donc comme une contre-forme de la protubérance latérale 11c du fût. Ainsi, en recouvrant le bord supérieur 51 de la cheminée 5a, la protubérance latérale 11c forme un déflecteur d'humidité permettant d'éviter l'introduction de gouttes d'eau au niveau de la liaison entre le fût 11 et le boîtier 5 ce qui permet de protéger l'intérieur du boîtier 5 et notamment le mécanisme réducteur.

La première extrémité 11a du fût 11 est en contact avec la portion intermédiaire évasée de la cheminée et est donc également évasée. De plus, les portions de la première extrémité 11a en regard des évidements 56 sont déformées de sorte à venir s'insérer au moins partiellement dans lesdits évidements 56 et former des ergots anti-rotation 110.

Par ailleurs, la deuxième extrémité 11b du fût 11 peut comprendre une partie interne plus étroite pour améliorer le guidage de l'arbre de sortie 12 du moto-réducteur 1. De plus, au niveau de la partie interne de sa deuxième extrémité 11b, le fût 11 peut comprendre une rainure 11d destinée à recevoir un joint 13, par exemple un joint torique ou un joint surmoulé pour assurer l'étanchéité entre le fût 11 et l'arbre de sortie du moto-réducteur 1.

Ainsi, à l'état assemblé, la cheminée 5a entoure partiellement le fût 11, c'est-à-dire depuis la première extrémité 11a jusqu'à la protubérance latérale 11c du fût 11.

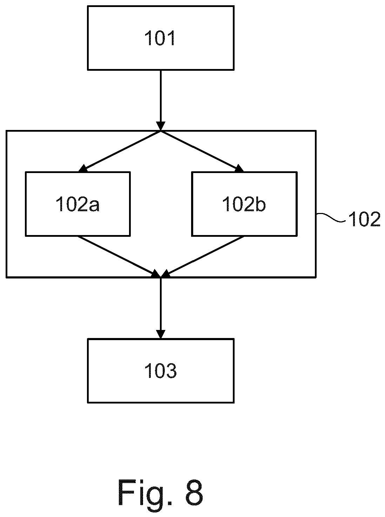

Les différentes étapes du procédé permettant l'assemblage et la fixation du fût plastique 11 sur le boîtier 5 vont maintenant être décrites à partir des figures 5 à 7 et de l'organigramme de la figure 8.

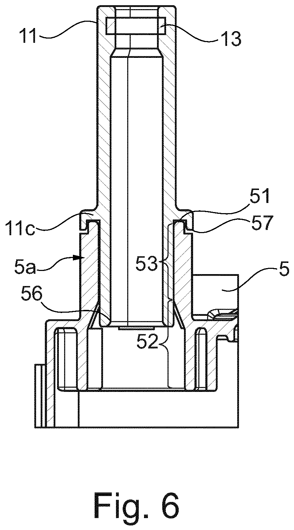

La première étape 101 concerne l'insertion de la première extrémité 11a du fût plastique 11 dans la cheminée 5a du boîtier 5 comme représenté par la flèche de la figure 5. L'insertion se fait jusqu'à ce que la protubérance latérale 11c vienne en contact avec l'extrémité de la cheminée comme représenté sur la figure 6. La protubérance latérale 11c est positionnée de manière à ce que la première extrémité 11a du fût plastique 11 soit située en regard de la portion intermédiaire évasée 55 de la cheminée 5a lorsque la protubérance latérale est en contact avec le bord supérieur 51 de la cheminée 5a.

La deuxième étape 102 concerne la déformation plastique de la première extrémité 11a du fût plastique 11. Cette déformation correspond par exemple à un évasement de la première extrémité contre la portion intermédiaire évasée 55 de la cheminée 5a pour former une contre-butée axiale et empêcher toute translation du fût plastique 11 par rapport à la cheminée 5a, la butée étant formée par l'appui de la protubérance latérale 11c sur le bord supérieur 51 de la cheminée 5a.

Selon une première alternative 102a, la déformation plastique est réalisée grâce à une étape de chauffage de la première extrémité 11a du fût plastique 11. Dans le cas d'un fût plastique 11 en polyamide (qui peut être chargé ou non) la température de chauffe est par exemple comprise entre 150 et 180°C. La déformation peut être réalisée par un élément conique ou sensiblement conique introduit par l'intérieur du boîtier 5 à l'intérieur de la première extrémité 11a du fût plastique 11. Une pression est appliquée sur l'élément conique vers la deuxième extrémité 11b du fût plastique 11 pendant que le fût plastique 11 est maintenu en position (la protubérance latérale 11c étant en contact avec le bord supérieur 51) dans le boîtier 5 conduisant à l'évasement de la première extrémité du fût plastique 11. Dans le cas où la cheminée 5a comprend des évidements 56, l'élément conique peut comprendre des formes complémentaires aux évidements 56 de sorte que le fût plastique 11 est déformé pour venir se positionner dans les évidements 56 et former des ergots anti-rotation 110.

Selon une deuxième alternative 102b, la déformation plastique de la première extrémité 11a du fût plastique 11 est obtenue grâce à une étape d'application d'ultrasons, par exemple via une sonde sonotrode. L'application d'ultrasons permet un chauffage local de la première extrémité 11a du fût plastique 11 ce qui permet alors une déformation plastique. Un élément conique ou sensiblement conique similaire à l'élément conique de l'alternative 102a peut être utilisé pour évaser la première extrémité 11a contre la portion intermédiaire évasée 55 de la cheminée 5a du boîtier 5. Une fois la première extrémité 11a du fût plastique évasée, le fût plastique est fixé sur boîtier et forme un assemblage.

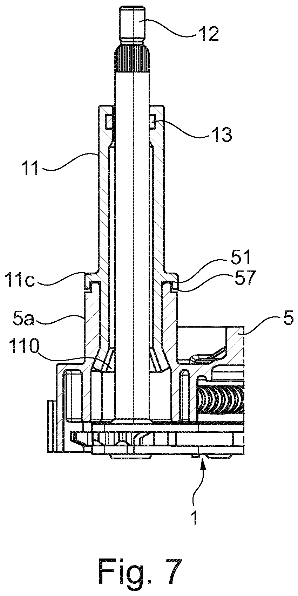

L'étape 203 consiste à placer le dispositif mécanique, par exemple un moto-réducteur 1, dans le boîtier 5 et l'arbre de sortie 12 du dispositif mécanique 1 dans le fût plastique 11 comme représenté sur la figure 7.

La présente invention ne se limite pas à un moto-réducteur 1 d'un dispositif d'essuyage d'une vitre arrière d'un véhicule automobile mais s'étend également à d'autres types de dispositifs mécaniques comprenant un arbre de sortie, un boîtier et un fût plastique de guidage de l'arbre de sortie fixé sur le boîtier.

Ainsi, l'utilisation d'un fût plastique 11 permet de réaliser la fonction de guidage de l'arbre de sortie 12 tout en limitant le poids et le coût de revient du fût 11. De plus, la fixation du fût plastique 11 sur le boîtier 5 qui peut être réalisé dans un matériau différent du fût 11, par exemple en métal, est simple et rapide et permet également de limiter les risques d'introduction d'humidité à l'intérieur du boîtier 5 et donc de préserver le mécanisme du moto-réducteur 1.

## Revendications

1. Procédé de fixation d'un fût plastique (11) destiné à guider un arbre de sortie (12) d'un dispositif mécanique sur un boîtier (5) dudit dispositif mécanique, ledit boîtier (5) comprenant une cheminée (5a) limitée par un bord supérieur (51) et une base (52), ladite cheminée (5a) étant agencée pour entourer partiellement l'arbre de sortie (12), le fût plastique (11) comprenant une protubérance latérale (11c), le procédé comprenant au moins les étapes suivantes :
- on insère une première extrémité (11a) du fût plastique (11) dans la cheminée (5a) du boîtier (5) jusqu'à ce que la protubérance latérale (11c) vienne en butée axiale contre le bord supérieur (51) de la cheminée (5a), **caractérisé en ce que**
- on déforme au moins partiellement la première extrémité (11a) du fût plastique (11) pour former une contre-butée axiale.

2. Procédé selon la revendication 1 dans lequel la base (52) de la cheminée (5a) est au moins partiellement évasée vers l'intérieur du boîtier (5) et l'étape de déformation comporte l'évasement par déformation plastique de la première extrémité (11a) du fût plastique (11).

3. Procédé selon la revendication 1 ou 2 dans lequel l'étape de déformation comprend une étape de chauffage ou d'application d'ultrasons.

4. Procédé selon la revendication 3 dans lequel l'étape de déformation comprend une étape de chauffage et la température de chauffe est notamment comprise entre 150 et 180°.

5. Procédé selon l'une des revendications précédentes dans lequel le fût plastique (11) est réalisé en polyamide.

6. Procédé selon l'une des revendications précédentes dans lequel la cheminée (5a) du boîtier (5) comprend au moins un évidement (56) et l'étape de déformation comprend la déformation du fût plastique (11) dans ledit, au moins un, évidement (56) pour former un ergot anti-rotation (110).

7. Procédé selon l'une des revendications précédentes dans lequel le dispositif mécanique est un moto-réducteur (1) d'un dispositif d'essuyage.

8. Assemblage d'un boîtier (5) d'un dispositif mécanique comprenant une cheminée (5a) configurée pour entourer au moins partiellement un arbre de sortie (12) du dispositif mécanique, ladite cheminée (5a) comprenant une base (52) comprenant une forme intérieure sensiblement conique évasée vers l'intérieur dudit boîtier (5), et d'un fût plastique (11), le fût plastique (11) comprenant une protubérance latérale (11c) formant butée et délimitant une première extrémité (11a) destinée à venir s'insérer dans la cheminée (5a) du boîtier (5) autour de l'arbre de sortie (12) du dispositif mécanique, **caractérisé en ce que** la première extrémité (11a) du fût plastique (11) a été déformée au moins partiellement pour former une contre-butée axiale.

9. Assemblage selon la revendication précédente dans lequel au moins un évidement (56) est ménagé dans la base (52) de la cheminée (5a) du boîtier (5) pour recevoir un ergot anti-rotation (110).

10. Assemblage selon la revendication 8 ou 9 dans lequel la protubérance latérale (11c) a une forme de collerette.

11. Assemblage selon la revendication précédente dans lequel la collerette comprend une partie recourbée vers la première extrémité (11a) du fût plastique (11).

12. Assemblage selon la revendication 8 à 11 dans lequel la cheminée (5a) comprend une contre-forme au moins en partie annulaire configurée pour coopérer avec la protubérance latérale (11c).

13. Assemblage selon l'une des revendications 8 à 12 dans lequel la première extrémité (11a) du fût plastique (11) est évasée pour coopérer avec la base (52) évasée de la cheminée (5a).

14. Moto-réducteur (1) comprenant un moteur électrique (3), un réducteur comprenant un arbre de sortie (12), un boîtier (5) renfermant au moins partiellement le moteur électrique (3) et le réducteur et un fût plastique (11) formant un assemblage avec le boîtier selon l'une des revendications 8 à 13.

## Patentansprüche

1. Verfahren zur Befestigung eines Kunststoffschaftes (11), der dazu bestimmt ist, eine Abtriebswelle (12) einer mechanischen Vorrichtung an einem Gehäuse (5) der mechanischen Vorrichtung zu führen, wobei das Gehäuse (5) einen Rohrstutzen (5a) umfasst, der von einem oberen Rand (51) und einem Unterteil (52) begrenzt wird, wobei der Rohrstutzen (5a) dazu eingerichtet ist, die Abtriebswelle (12) teilweise zu umgeben, wobei der Kunststoffschaft (11) einen seitlichen Vorsprung (11c) umfasst, wobei das Verfahren mindestens die folgenden Schritte umfasst:
- ein erstes Ende (11a) des Kunststoffschaftes (11) wird in den Rohrstutzen (5a) des Gehäuses (5) so weit eingeführt, bis der seitliche Vorsprung (11c) am oberen Rand (51) des Rohrstutzens (5a) zur axialen Anlage kommt, **dadurch gekennzeichnet, dass**
- das erste Ende (11a) des Kunststoffschaftes (11) wird wenigstens teilweise verformt, um ein axiales Widerlager zu bilden.

2. Verfahren nach Anspruch 1**,** wobei das Unterteil (52) des Rohrstutzens (5a) wenigstens teilweise zum Inneren des Gehäuses (5) hin konisch erweitert ist und der Schritt der Verformung die konische Erweiterung des ersten Endes (11a) des Kunststoffschaftes (11) durch plastische Verformung umfasst.

3. Verfahren nach Anspruch 1 oder 2**,** wobei der Schritt der Verformung einen Schritt der Erwärmung oder der Anwendung von Ultraschall umfasst.

4. Verfahren nach Anspruch 3, wobei der Schritt der Verformung einen Schritt der Erwärmung umfasst und die Erwärmungstemperatur insbesondere zwischen 150 und 180° liegt.

5. Verfahren nach dem vorhergehenden Anspruch, wobei der Kunststoffschaft (11) aus Polyamid hergestellt ist.

6. Verfahren nach einem der vorhergehenden Ansprüche, wobei der Rohrstutzen (5a) des Gehäuses (5) mindestens eine Vertiefung (56) umfasst und der Schritt der Verformung die Verformung des Kunststoffschaftes (11) in der mindestens einen Vertiefung (56) umfasst, um eine Verdrehsicherungsnase (110) zu bilden.

7. Verfahren nach einem der vorhergehenden Ansprüche, wobei die mechanische Vorrichtung ein Getriebemotor (1) einer Wischvorrichtung ist.

8. Anordnung eines Gehäuses (5) einer mechanischen Vorrichtung, das einen Rohrstutzen (5a) umfasst, der dafür ausgebildet ist, eine Abtriebswelle (12) der mechanischen Vorrichtung wenigstens teilweise zu umgeben, wobei der Rohrstutzen (5a) ein Unterteil (52) umfasst, das eine im Wesentlichen konische innere Form, die zum Inneren des Gehäuses (5) hin erweitert ist, umfasst, und eines Kunststoffschaftes (11), wobei der Kunststoffschaft (11) einen seitlichen Vorsprung (11c) umfasst, der einen Anschlag bildet und ein erstes Ende (11a) begrenzt, das dazu bestimmt ist, in den Rohrstutzen (5a) des Gehäuses (5) um die Abtriebswelle (12) der mechanischen Vorrichtung herum eingeführt zu werden, **dadurch gekennzeichnet, dass** das erste Ende (11a) des Kunststoffschaftes (11) wenigstens teilweise verformt worden ist, um ein axiales Widerlager zu bilden.

9. Anordnung nach dem vorhergehenden Anspruch, wobei mindestens eine Vertiefung (56) im Unterteil (52) des Rohrstutzens (5a) des Gehäuses (5) ausgebildet ist, um eine Verdrehsicherungsnase (110) aufzunehmen.

10. Anordnung nach Anspruch 8 oder 9, wobei der seitliche Vorsprung (11c) eine Kragenform aufweist.

11. Anordnung nach dem vorhergehenden Anspruch, wobei der Kragen einen Teil umfasst, der zum ersten Ende (11a) des Kunststoffschaftes (11) hin umgebogen ist.

12. Anordnung nach Anspruch 8 bis 11, wobei der Rohrstutzen (5a) eine wenigstens teilweise ringförmige Gegenform umfasst, die dafür ausgebildet ist, mit dem seitlichen Vorsprung (11c) zusammenzuwirken.

13. Anordnung nach einem der Ansprüche 8 bis 12, wobei das erste Ende (11a) des Kunststoffschaftes (11) konisch erweitert ist, um mit dem konisch erweiterten Unterteil (52) des Rohrstutzens (5a) zusammenzuwirken.

14. Getriebemotor (1), welcher einen Elektromotor (3), ein Untersetzungsgetriebe, das eine Abtriebswelle (12) umfasst, ein Gehäuse (5), das den Elektromotor (3) und das Untersetzungsgetriebe wenigstens teilweise umschließt, und einen Kunststoffschaft (11), der mit dem Gehäuse eine Anordnung nach einem der Ansprüche 8 bis 13 bildet, umfasst.

## Claims

1. A method for attaching a plastic barrel (11) intended to guide an output shaft (12) of a mechanical device to a housing (5) of said mechanical device, said housing (5) comprising a chimney (5a) delimited by an upper edge (51) and a base (52), said chimney (5a) being arranged to partially surround the output shaft (12), the plastic barrel (11) comprising a lateral protuberance (11c), the method comprising at least the following steps:
- inserting a first end (11a) of the plastic barrel (11) into the chimney (5a) of the housing (5) until the lateral protuberance (11c) axially abuts against the upper edge (51) of the chimney (5a), **characterized in that**
- at least partially deforming the first end (11a) of the plastic barrel (11) in order to form an axial counter-abutment.

2. The method as claimed in claim 1, wherein the base (52) of the chimney (5a) is at least partially flared towards the inside of the housing (5) and the deformation step comprises flaring the first end (11a) of the plastic barrel (11) by plastic deformation.

3. The method as claimed in claim 1 or 2, wherein the deformation step comprises a step of heating or applying ultrasound.

4. The method as claimed in claim 3, wherein the deformation step comprises a heating step and the heating temperature is, in particular, between 150 and 180°.

5. The method as claimed in any one of the preceding claims, wherein the plastic barrel (11) is made of polyamide.

6. The method as claimed in any one of the preceding claims, wherein the chimney (5a) of the housing (5) comprises at least one recess (56) and the deformation step comprises deforming the plastic barrel (11) into said at least one recess (56) in order to form an anti-rotation lug (110).

7. The method as claimed in any one of the preceding claims, wherein the mechanical device is a gear motor (1) of a wiper device.

8. Assembly of a housing (5) for a mechanical device comprising a chimney (5a) configured to at least partially surround an output shaft (12) of the mechanical device, said chimney (5a) comprising a base (52) comprising a substantially conical inner shape flared towards the inside of said housing (5) and a plastic barrel (11), the plastic barrel (11) comprising a lateral protuberance (11c) forming an abutment and delimiting a first end (11a) intended to be inserted into the chimney (5a) of the housing (5) around the output shaft (12) of the mechanical device, **characterized in that** the first end (11a) of the plastic barrel (11) have been at least partially deformed to form an axial abutment.

9. Assembly as claimed in the preceding claim, wherein at least one recess (56) is provided in the base (52) of the chimney (5a) of the housing (5) in order to receive an anti-rotation lug (110).

10. Assembly according to claim 8 or 9, wherein the lateral protuberance (11c) is flange-shaped.

11. The assembly as claimed in the preceding claim, wherein the flange comprises a part that is curved towards the first end (11a) of the plastic barrel (11).

12. The assembly as claimed in claims 8 to 11, wherein the chimney (5a) comprises an at least partially annular mating shape configured to cooperate with the lateral protuberance (11c).

13. The assembly as claimed in one of claims 8 to 12, wherein the first end (11a) of the plastic barrel (11) is flared to cooperate with the flared base (52) of the chimney (5a).

14. A gear motor (1) comprising an electric motor (3), a reduction gear comprising an output shaft (12), a housing (5) at least partially containing the electric motor (3) and the reduction gear and a plastic barrel (11) forming an assembly with the housing as claimed in one of claims 8 to 13.
